(19) Europäisches Patentamt
European Patent Office
Office européen des brevets

(11) EP 0 433 987 B1

(12) **EUROPÄISCHE PATENTSCHRIFT**

(45) Veröffentlichungstag und Bekanntmachung des Hinweises auf die Patenterteilung:
**12.06.1996 Patentblatt 1996/24**

(51) Int. Cl.[6]: **C08F 210/06**, C08F 4/602

(21) Anmeldenummer: **90124592.8**

(22) Anmeldetag: **18.12.1990**

# (54) Verfahren zur Herstellung eines syndiotaktischen Propylen-Copolymers

Process for preparing a syndiotactic propylene copolymer

Procédé de préparation d'un copolymère de propylène syndiotactique

(84) Benannte Vertragsstaaten:
**BE DE ES FR GB IT NL**

(30) Priorität: **21.12.1989 DE 3942366**

(43) Veröffentlichungstag der Anmeldung:
**26.06.1991 Patentblatt 1991/26**

(73) Patentinhaber: **HOECHST AKTIENGESELLSCHAFT**
**D-65926 Frankfurt am Main (DE)**

(72) Erfinder:
- **Winter, Andreas, Dr.**
  **D-6246 Glashütten (DE)**
- **Dolle, Volker, Dr.**
  **W-6233 Kelkheim (Taunus) (DE)**
- **Rohrmann, Jürgen, Dr.**
  **W-6237 Liederbach (DE)**
- **Spaleck, Walter, Dr.**
  **W-6237 Liederbach (DE)**
- **Antberg, Martin, Dr.**
  **W-6238 Hofheim am Taunus (DE)**

(56) Entgegenhaltungen:
**EP-A- 0 387 691** **EP-A- 0 395 055**

- **JOURNAL OF THE AMERICAN CHEMICAL SOCIETY. Bd. 110, 1988, GASTON, PA US Seiten 6255 - 6256; J.A.EWEN: 'SYNDIOSPECIFIC PROPYLENE POLYMERIZATION WITH GROUP 4 METALLOCENES'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 433 987 B1

Printed by Rank Xerox (UK) Business Services
2.11.9/3.4

## Beschreibung

Syndiotaktische Polyolefine besitzen gute Transparenz, Flexibilität und Reißfestigkeit.

Aus EP 395 055 A1 ist ein syndiotaktisches Polypropylen-Copolymer bekannt, das 70 bis 99 mol-% Propylen und 0.1 bis 30 mol-% eines anderen Olefins, das nicht Propylen ist, enthält. Im $^{13}C$-NMR-Spektrum des syndiotaktischen Copolymers wird ein Verhältnis der Intensität eines Peaks bei etwa 20.2 ppm zu der Summe der Intensitäten aller Peaks bei twa 19 - 22 ppm, die der Methylen-Gruppe in Propyleneinheiten zugeordnet werden, von 0.3 oder mehr ermittelt.

Aus EP 426 645 A1 ist ein syndiotaktisches Copolymer aus Propylen und Olefin mit 2 bis 10 C-Atomen bekannt, wobei die Mikrostruktur der Polypropylen- und Olefineinheiten, außer Polyethyleneinheiten, in der Polymerkette aus Blöcken sich wiederholender racematischer Zweiergruppen, die vorwiegend durch Einheiten mesomerer Dreiergruppen verbunden sind, besteht.

J. Am. Chem. Soc. 1988, Vol. 110, Seiten 6255-56 beschreibt die Herstellung von syndiotaktischem Polypropylen unter Verwendung von Isopropyl(cyclopentadienyl-1-fluorenyl)hafnium (IV) dichlorid und Methylaluminoxan.

Bei Verpackungen, bei Folienanwendungen, Hotmelt-Anwendungen und Oberflächenbeschichtungen, aber auch bei hochflexiblen, transparenten Formkörpern wird auf eine noch höhere Transparenz und Flexibilität Wert gelegt. Darüberhinaus sind für viele Anwendungen, beispielsweise für Beschichtungen, niedrigere Schmelzpunkte wünschenswert.

Die Aufgabe konnte gelöst werden durch Copolymerisation von Propylen mit mindestens einem weiteren Olefin in Gegenwart eines Metallocens und eines Aluminoxans.

Die Erfindung betrifft somit ein Verfahren zur Herstellung eines syndiotaktischen Propylen-Copolymers, bestehend aus 99,9 bis 50 Gew.-%, bezogen auf das Gesamtpolymer, Propyleneinheiten und 0,1 bis 50 Gew.-%, bezogen auf das Gesamtpolymer, aus Einheiten, die sich von Ethylen oder einem Olefin mit mindestens 4 C-Atomen der Formel $R^a$-CH=CH-$R^b$ ableiten, worin $R^a$ und $R^b$ gleich oder verschieden sind und ein Wasserstoffatom oder einen Alkylrest mit 1 bis 20 C-Atomen bedeuten oder $R^a$ und $R^b$ mit den sie verbindenden C-Atomen einen Ring mit 4 bis 10 C-Atomen bilden, durch Polymerisation von 50 bis 99,5 Gew.-%, bezogen auf die Gesamtmenge der Monomeren, Propylen und 0,5 bis 50 Gew.-%, bezogen auf die Gesamtmenge der Monomeren, mindestens eines Vertreters der Gruppe Ethylen und Olefine mit mindestens 4 C-Atomen der Formel $R^a$-CH=CH-$R^b$, worin $R^a$ und $R^b$ die oben genannte Bedeutung haben, bei einer Temperatur von -40°C bis 150°C, bei einem Druck von 0,5 bis 100 bar, in Lösung, in Suspension oder in der Gasphase, in Gegenwart eines Katalysators, welcher aus einem Metallocen als Übergangsmetallkomponente und einem Aluminoxan der Formel II

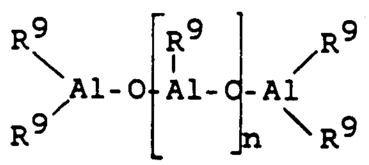

(II)

für den linearen Typ und/oder der Formel III

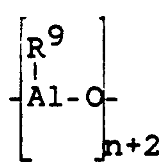

(III)

für den cyclischen Typ besteht, wobei in den Formeln II und III $R^9$ eine $C_1$-$C_6$-Alkylgruppe oder Phenyl oder Benzyl bedeutet und n eine ganze Zahl von 2 bis 50 ist, dadurch gekennzeichnet, daß die Polymerisation in Gegenwart eines Katalysators durchgeführt wird, dessen Übergangsmetallkomponente eine Verbindung der Formel I

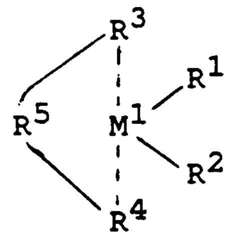

(I)

ist, worin

- $M^1$ Titan, Zirkon, Hafnium, Vanadium, Niob oder Tantal ist,
- $R^1$ und $R^2$ gleich oder verschieden sind und ein Wasserstoffatom, ein Halogenatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe oder eine $C_8$-$C_{40}$-Arylalkenylgruppe bedeuten,
- $R^3$ und $R^4$ verschieden sind und einen ein- oder mehrkernigen Kohlenwasserstoffrest, welcher mit dem Zentralatom $M^-$ eine Sandwichstruktur bilden kann, bedeuten
- $R^5$

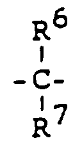 oder 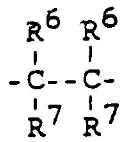 ,

wobei $R^6$ und $R^7$ gleich oder verschieden sind und $R^6$ eine $C_6$-$C_{10}$-Arylgruppe ist und $R^7$ ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Fluorarylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder $R^6$ und $R^7$ jeweils mit den sie verbindenden Atomen einen Ring bilden.

Der für das erfindungsgemäße Verfahren zu verwendende Katalysator besteht aus einem Aluminoxan und einem Metallocen der Formel I

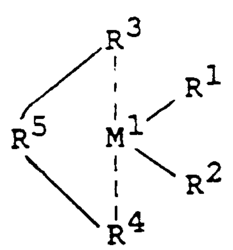

(I).

In Formel I ist $M^1$ ein Metall aus der Gruppe Titan, Zirkon, Hafnium, Vanadium, Niob und Tantal, vorzugsweise Zirkon und Hafnium.

$R^1$ und $R^2$ sind gleich oder verschieden und bedeuten ein Wasserstoffatom, eine $C_1$-$C_{10}$-, vorzugsweise $C_1$-$C_3$-Alkylgruppe, eine $C_1$-$C_{10}$-, vorzugsweise $C_1$-$C_3$-Alkoxygruppe, eine $C_6$-$C_{10}$-, vorzugsweise $C_6$-$C_8$-Arylgruppe, eine $C_6$-$C_{10}$-, vorzugsweise $C_6$-$C_8$-Aryloxygruppe, eine $C_2$-$C_{10}$-, vorzugsweise $C_2$-$C_4$-Alkenylgruppe, eine $C_7$-$C_{40}$-, vorzugsweise

$C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe oder ein Halogenatom, vorzugsweise Chlor.

$R^3$ und $R^4$ sind verschieden und bedeuten einen ein- oder mehrkernigen Kohlenwasserstoffrest, welcher mit dem Zentralatom $M^1$ eine Sandwichstruktur bilden kann.

Bevorzugt sind $R^3$ und $R^4$ Fluorenyl und Cyclopentadienyl, wobei die Grundkörper noch zusätzliche Substituenten tragen können.

$R^5$ ist eine ein- oder mehrgliedrige Brücke, welche die Reste $R^3$ und $R^4$ verknüpft, und bedeutet

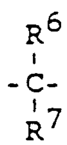 oder 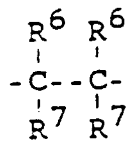 ,

wobei $R^6$, und $R^7$ gleich oder verschieden sind und $R^6$ eine $C_6$-$C_{10}$-Arylgruppe ist und $R^7$ ein Wasserstoffatom, ein Halogenatom, vorzugsweise Chlor, eine $C_1$-$C_{10}$-, vorzugsweise $C_1$-$C_3$-Alkylgruppe, insbesondere Methylgruppe, eine $C_1$-$C_{10}$-Fluoralkylgruppe, vorzugsweise $CF_3$-Gruppe, eine $C_6$-$C_{10}$-Fluorarylgruppe, vorzugsweise Pentafluorphenylgruppe, eine $C_6$-$C_{10}$-, vorzugsweise $C_6$-$C_8$-Arylgruppe, eine $C_1$-$C_{10}$-, vorzugsweise $C_1$-$C_4$-Alkoxygruppe, insbesondere Methoxygruppe, eine $C_2$-$C_{10}$-, vorzugsweise $C_2$-$C_4$-Alkenylgruppe, eine $C_7$-$C_{40}$-vorzugsweise $C_7$-$C_{10}$-Arylalkylgruppe, eine $C_8$-$C_{40}$-, vorzugsweise $C_8$-$C_{12}$-Arylalkenylgruppe oder eine $C_7$-$C_{40}$-, vorzugsweise $C_7$-$C_{12}$-Alkylarylgruppe bedeuten, oder $R^6$ und $R^7$ bilden jeweils zusammen mit den sie verbindenden Atomen einen Ring.

$R^5$ ist vorzugsweise $=CR^6R^7$

Die beschriebenen Metallocene können nach folgendem allgemeinen Reaktionsschema hergestellt werden:

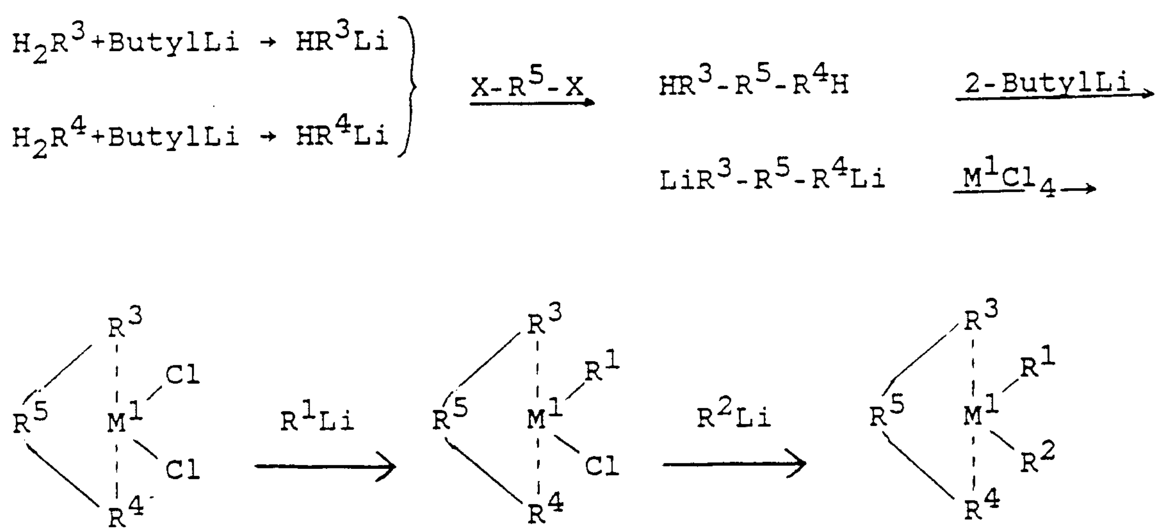


(X = Cl, Br, J, O-Tosyl)
oder
$H_2R^3$ + ButylLi → $HR^3Li$

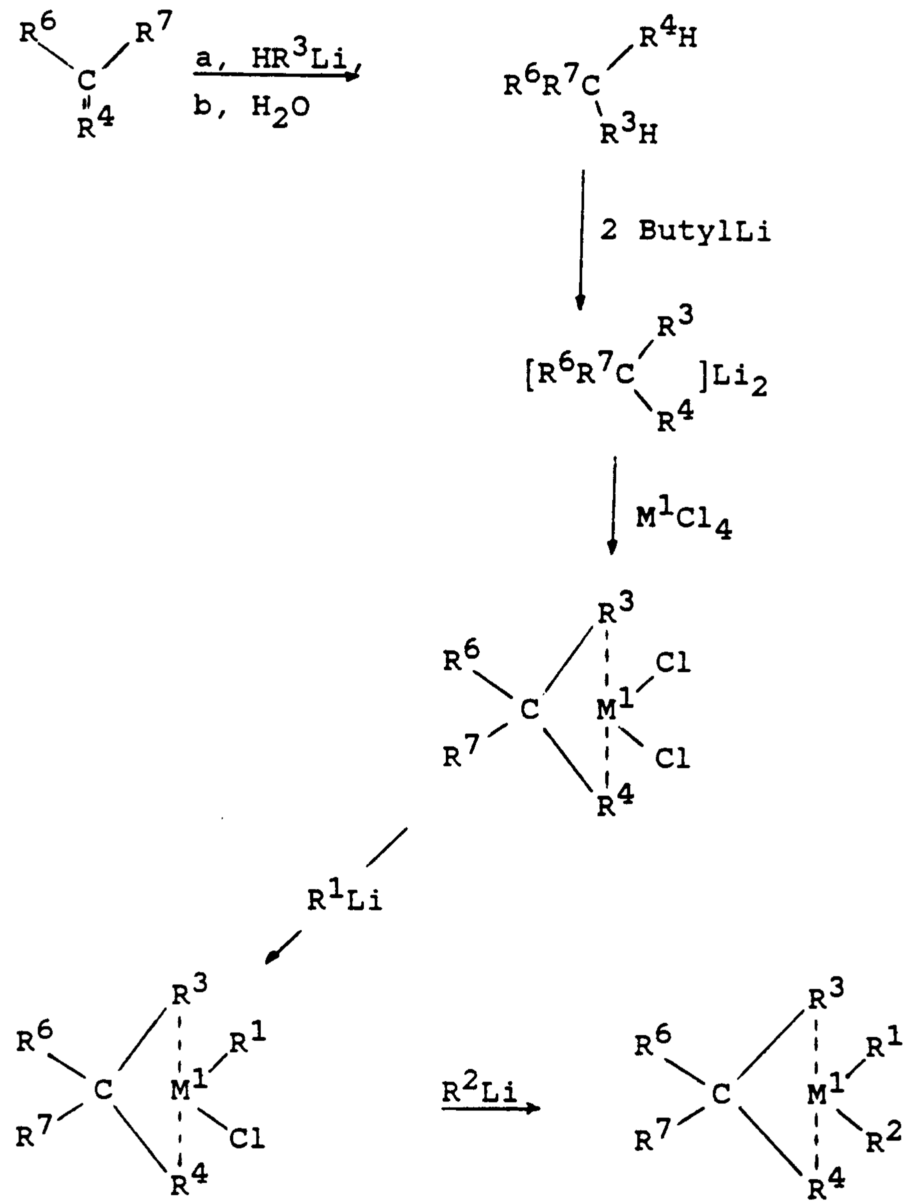


Bevorzugt eingesetzte Metallocene sind (Arylalkyliden)(9-fluorenyl)(cyclopentadienyl)zirkondichlorid, und (Diarylmethylen)(9-fluorenyl)(cyclopentadienyl)zirkondichlorid.

Besonders bevorzugt sind dabei (Methyl(phenyl)methylen)(9-fluorenyl)(cyclopentadienyl)zirkondichlorid und (Diphenylmethylen)(9-fluorenyl)(cyclopentadienyl)zirkondichlorid sowie die jeweils entsprechenden Hafnium-Analogen.

Der Cokatalysator ist ein Aluminoxan der Formel II

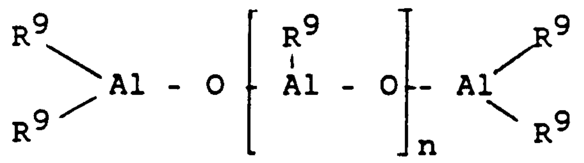 (II)

für den linearen Typ und/oder der Formel III

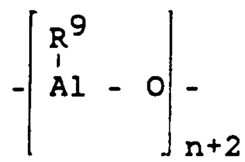 (III)

für den cyclischen Typ. In diesen Formeln bedeuten $R^9$ eine $C_1$-$C_6$-Alkylgruppe, vorzugsweise Methyl, Ethyl oder Isobutyl, Butyl oder Neopentyl, oder Phenyl oder Benzyl. Besonders bevorzugt ist Methyl. n ist eine ganze Zahl von 2 bis 50, bevorzugt 5 bis 40. Die exakte Struktur des Aluminoxans ist jedoch nicht bekannt.

Das Aluminoxan kann auf verschiedene Art und Weise hergestellt werden.

Eine Möglichkeit ist die vorsichtige Zugabe von Wasser zu einer verdünnten Lösung eines Aluminiumtrialkyls, indem die Lösung des Aluminiumtrialkyls, vorzugsweise Aluminiumtrimethyl, und das Wasser jeweils in kleinen Portionen in eine vorgelegte größere Menge eines inerten Lösemittels eingetragen werden und zwischendurch das Ende der Gasentwicklung jeweils abgewartet wird.

Bei einem anderen Verfahren wird fein gepulvertes Kupfersulfatpentahydrat in Toluol aufgeschlämmt und in einem Glaskolben unter Inertgas bei etwa -20°C mit soviel Aluminiumtrialkyl versetzt, daß für je 4 Al-Atome etwa 1 mol $CuSO_4 \cdot 5H_2O$ zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30°C ansteigt. Anschließend wird das im Toluol gelöste Aluminoxan von dem Kupfersulfat abfiltriert und die Lösung im Vakuum eingeengt. Es wird angenommen, daß bei diesen Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -20 bis 100°C in einem inerten aliphatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1 : 1 bis 50 : 1 - vorzugsweise 5 : 1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen $Al_2(SO_4)_3 \cdot 16H_2O$ und $Al_2(SO_4)_3 \cdot 18H_2O$ mit dem besonders hohen Kristallwassergehalt von 16 bzw. 18 mol $H_2O$/mol $Al_2(SO_4)_3$.

Eine weitere Variante zur Herstellung von Aluminoxanen besteht darin, Aluminiumtrialkyl, vorzugsweise Aluminiumtrimethyl, in dem im Polymerisationskessel vorgelegten Suspensionsmittel, vorzugsweise im flüssigen Monomeren, in Heptan oder Toluol, zu lösen und dann die Aluminiumverbindung mit Wasser umzusetzen.

Neben den zuvor geschilderten Verfahren zur Herstellung von Aluminoxanen gibt es weitere, welche brauchbar sind. Unabhängig von der Art der Herstellung ist allen Aluminoxanlösungen ein wechselnder Gehalt an nicht umgesetztem Aluminiumtrialkyl, das in freier Form oder als Addukt vorliegt, gemeinsam. Dieser Gehalt hat einen noch nicht genau geklärten Einfluß auf die katalytische Wirksamkeit, der je nach eingesetzter Metallocenverbindung verschieden ist.

Es ist möglich, das Metallocen vor dem Einsatz in der Polymerisationsreaktion mit einem Aluminoxan der Formel II und/oder III vorzuaktivieren. Dadurch wird die Polymerisationsaktivität deutlich erhöht und die Kornmorphologie verbessert.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff.
Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 100°C, vorzugsweise 0 bis 70°C.

Eine deutlich längere Voraktivierung ist möglich, sie wirkt sich normalerweise jedoch weder aktivitätssteigernd noch aktivitätsmindernd aus, kann jedoch zu Lagerzwecken durchaus sinnvoll sein.

Die Polymerisation wird in bekannter Weise in Lösung, in Suspension oder in der Gasphase, kontinuierlich oder diskontinuierlich, ein- oder mehrstufig bei einer Temperatur von -40 bis 150°C, vorzugsweise -30 bis 100°C, insbesondere 0 bis 80°C, durchgeführt.

Polymerisiert werden Propylen und mindestens ein Vertreter der Gruppe, die aus Ethylen und Olefinen mit mindestens 4 C-Atomen der Formel $R^aCH=CHR^b$, worin $R^a$ und $R^b$ gleich oder verschieden sind und ein Wasserstoffatom oder einen Alkylrest mit 1 bis 20 C-Atomen bedeuten, wobei $R^a$ und $R^b$ mit den sie verbindenden C-Atomen einen Ring mit 4 bis 10 C-Atomen bilden können, besteht. Beispiele für solche Olefine sind Ethylen, 1-Buten, 1-Hexen, 4-Methyl-1-penten, 1-Octen, Norbornen oder Norbornadien. Bevorzugt werden Ethylen, 1-Buten und 4-Methyl-1-penten.

Der Gesamtdruck im Polymerisationssystem beträgt 0,5 bis 100 bar. Bevorzugt ist die Polymerisation in dem technisch besonders interessanten Druckbereich von 5 bis 60 bar.

Eingebaut in das Polymere werden maximal 50 Gew.-%, vorzugsweise 0,5 bis 20 Gew.-%, insbesondere 0,5 bis 10 Gew.-% des oder der Comonomeren. Die Einsatzmengen betragen somit 50 bis 99,9 vorzugsweise 80 bis 99,5 Gew.-% Propylen und 0,1 bis 50, vorzugsweise 0,5 bis 20 Gew.-% des oder der Comonomeren.

Als Molmassenregler kann Wasserstoff verwendet werden.

Dabei wird die Metallocenverbindung in einer Konzentration, bezogen auf das Übergangsmetall, von $10^{-3}$ bis $10^{-7}$, vorzugsweise $10^{-4}$ bis $10^{-6}$ mol Übergangsmetall pro $dm^3$ Lösemittel bzw. pro $dm^3$ Reaktorvolumen angewendet. Das Aluminoxan wird in einer Konzentration von $10^{-5}$ bis $10^{-1}$ mol, vorzugsweise $10^{-5}$ bis $10^{-2}$ mol pro $dm^3$ Lösemittel bzw. pro $dm^3$ Reaktorvolumen verwendet. Prinzipiell sind aber auch höhere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Butan, Pentan, Hexan, Heptan, Isooctan, Cyclohexan, Methylcyclohexan genannt.

Weiterhin kann eine Benzin- bzw. hydrierte Dieselölfraktion benutzt werden. Brauchbar ist auch Toluol. Bevorzugt wird im flüssigen Monomeren oder in der Gasphase polymerisiert.

Werden inerte Lösemittel verwendet, werden die Monomeren gasförmig oder flüssig in den Reaktor dosiert. Wird ein Monomer als Suspensionsmittel verwendet, so wird das Comonomere bzw. werden die Comonomeren gasförmig oder flüssig zudosiert.
Des weiteren ist es möglich, in einer Mischung verschiedener Monomeren als Suspensionsmittel zu polymerisieren, ein weiteres Monomer kann dann flüssig oder gasförmig zudosiert werden.

Die Dauer der Polymerisation ist beliebig, da das erfindungsgemäß zu verwendende Katalysatorsystem einen nur geringen zeitabhängigen Abfall der Polymerisationsaktivität zeigt.

Erfindungsgemäß ist ein Syndiotaktisches Propylen-Copolymer vorgesehen, bestehend aus 99,9 bis 50 Gew.-%, bezogen auf das Gesamtpolymer, Propyleneinheiten und 0,1 bis 50 Gew.-%, bezogen auf das Gesamtpolymer, aus Einheiten, die sich von Ethylen oder einem Olefin mit mindestens 4 C-Atomen der Formel $R^a$-CH=CH-$R^b$ ableiten, worin $R^a$ und $R^b$ gleich oder verschieden sind und ein Wasserstoffatom oder einen Alkylrest mit 1 bis 20 C-Atomen bedeuten oder $R^a$ und $R^b$ mit den sie verbindenden C-Atomen einen Ring mit 4 bis 10 C-Atomen bilden, das nach dem erfindungsgemäßen Verfahren erhältlich ist.

Mittels des erfindungsgemäßen Verfahrens können chemisch hoch einheitliche Copolymere hergestellt werden. Sie können in Extrudern, Knetern oder sonstigen nach dem Stand der Technik verwendeten Maschinen zu Kunststoffformkörpern verarbeitet werden, die sich durch hohe Transparenz, gummiartiges Verhalten, hohe Flexibilität und günstig niedrig liegende Schmelzpunkte auszeichnen.

Erfindungsgemäß ist die Verwendung des erfindungsgemäßen syndiotaktischen Propylen-Copolymeren zur Herstellung von Folien und Formkörpern durch Extrusion, Spritzguß, Blasformen oder Preßsintern vorgesehen.

Erfindungsgemäß sind Folien und Formkörper vorgesehen, die ein erfindunsgemäßes syndiotaktisches Propylen-Copolymer enthalten.

Die nachfolgenden Beispiele sollen die Erfindung erläutern.

Die Bestimmung der Eigenschaften der gemäß den nachfolgenden Beispielen hergestellten Polymeren wurde im einzelnen nach folgenden Methoden durchgeführt.

Der Schmelzindex (MFI) wurde nach DIN 53 735 gemessen und in $dg.min^{-1}$ angegeben.

Die Viskositätszahl VZ der Polymeren wurde an 0,1 Gew.-%igen Lösungen in Dekahydronaphthalin (Isomerengemisch) bei 135°C in einem Kapillarviskosimeter bestimmt und in $cm^3/g$ angegeben.

Die Messung der Kugeldruckhärte erfolgte in Anlehnung an DIN 53 456 an gepreßten Platten, die 3 h bei 120°C unter $N_2$ getempert, im Laufe von 3 h abgekühlt und zum Temperaturausgleich 24 h bei 23°C und 50 % rel. Luftfeuchte in einer Klimakammer gelagert worden waren.

Zur Bestimmung der mechanischen Eigenschaften wurde der Schlagbiegeversuch am Normkleinstab mit V-Einkerbung (Flankenwinkel 45 °, Kerbtiefe 1,3 mm, Kerbradius 1 mm) herangezogen. Die Probenkörper wurden gepreßten Platten entnommen, die nach Herstellung 24 h bei 23 °C und 50 % rel. Luftfeuchte gelagert worden waren.

$M_w$ = Molmassengewichtsmittel in g/mol
$M_w/M_n$ = Polydispersität
Die Molmassen wurden durch Gelpermeationschromatographie bestimmt.

Die Produktzusammensetzung wurde $^{13}C$-NMR-spektroskopisch ermittelt. Dabei bedeuten:

| | |
|---|---|
| $\bar{n}_{PP}$ | mittlere Blocklänge Polypropylen |
| $\bar{n}_{PE}$ | mittlere Blocklänge Polyethylen |
| $\bar{n}_{syn}$ | mittlere syndiotaktische Blocklänge |
| SI | syndiotaktischer Index (SI = rr+½ mr) |

Schmelzpunkte (Smp), Kristallisationspunkte (Kristp) und die Glastemperaturen ($T_g$) wurden durch DSC-Messungen (20°C/min Aufheizgeschwindigkeit, 5°C/min Abkühlgeschwindigkeit) bestimmt.

Alle nachfolgenden Arbeitsoperationen der Metallocensynthesen wurden unter Schutzgasatmosphäre unter Verwendung absolutierter Lösemittel durchgeführt.

Diphenylmethylen(9-fluorenyl)(cyclopentadienyl)zirkondichlorid

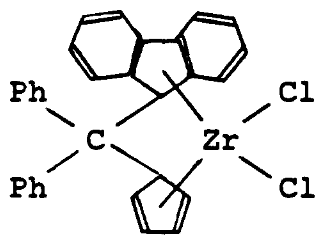

Eine Lösung von 5,10 g (30,7 mmol) Fluoren in 60 $cm^3$ THF wurde bei Raumtemperatur mit 12,3 $cm^3$ (30,7 mmol) einer 2,5 molaren Hexan-Lösung von n-Butyllithium langsam versetzt. Nach 40 min wurde die orange Lösung mit 7,07 g (30,7 mmol) Diphenylfulven versetzt und über Nacht gerührt. Zur dunkelroten Lösung wurden 60 $cm^3$ Wasser zugesetzt, wobei sich die Lösung gelb färbte, und die Lösung ausgeethert. Die über $MgSO_4$ getrocknete Etherphase wurde eingeengt und bei -35°C der Kristallisation überlassen.

Man erhielt 5,1 g (42 %) 1,1-Cyclopentadienyl-(9-fluorenyl)-diphenylmethan als beiges Pulver.

2,0 g (5,0 mmol) der Verbindung wurden in 20 $cm^3$ THF gelöst und bei 0°C mit 6,4 $cm^3$ (10 mmol) einer 1,6 molaren Lösung von Butyllithium in Hexan versetzt. Nach 15 min Rühren bei Raumtemperatur wurde das Lösemittel abgezogen, der rote Rückstand im Ölpumpenvakuum getrocknet und mehrmals mit Hexan gewaschen. Nach dem Trocknen im Ölpumpenvakuum wurde das rote Pulver bei -78°C zu einer Suspension von 1,16 g (5,00 mmol) $ZrCl_4$ gegeben. Nach dem langsamen Aufwärmen wurde der Ansatz noch 2 h bei Raumtemperatur gerührt. Die rosafarbene Suspension wurde über eine G3-Fritte filtriert. Der rosarote Rückstand wurde mit 20 $cm^3$ $CH_2Cl_2$ gewaschen, im Ölpumpenvakuum getrocknet und mit 120 $cm^3$ Toluol extrahiert. Nach Abziehen des Lösemittels und Trocknen im Ölpumpenvakuum erhielt man 0,55 g des Zirkon-Komplexes in Form eines rosaroten Kristallpulvers.

Das orangerote Filtrat des Reaktionsansatzes wurde eingeeengt und bei -35°C der Kristallisation überlassen. Aus $CH_2Cl_2$ kristallisieren weitere 0,45 g des Komplexes. Gesamtausbeute 1,0 g (36 %). Korrekte Elementaranalysen. Das Massenspektrum zeigte $M^+$ = 556. $^1H$-NMR-Spektrum (100 MHz, $CDCl_3$); 6,90 - 8,25 (m, 16, Flu-H, Ph-H), 6,40 (m, 2, Ph-H), 6,37 (t, 2, Cp-H), 5,80 (t, 2, Cp-H).

Das Metallocen Dimethylmethylen(9-fluorenyl)-(cyclopentadienyl)-zirkondichlorid wurde in Anlehnung an die Literaturstelle J. Am. Chem. Soc. 110 (1988) 6255 hergestellt.

(Phenyl(methyl)methylen)(9-fluorenyl)(cyclopentadienyl)-hafniumdichlorid

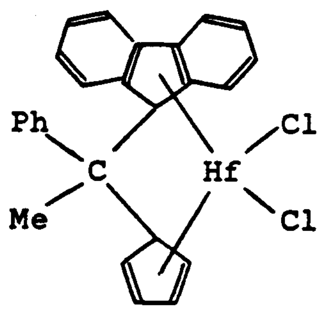

Eine Lösung von 11,4 g (67,8 mmol) 6-Methyl-6-phenylfulven in 40 $cm^3$ THF wurde bei Raumtemperatur mit einer Lösung von 67,8 mmol Lithiumfluoren in 50 $cm^3$ THF versetzt. Nach 2 Stunden Rühren bei Raumtemperatur wurden 60 $cm^3$ Wasser zugesetzt. Die dabei ausgefallene Substanz wurde abgesaugt, mit Diethylether gewaschen und im Ölpumpenvakuum getrocknet. Man erhielt 19,1 g (84,2 %) 2,2-Cyclopentadienyl-(9-fluorenyl)-ethylbenzol (korrekte Elementaranalysen; $^1$H-NMR-Spektrum).

10,0 g (19,9 mmol) der Verbindung wurden in 60 $cm^3$ THF gelöst und bei 0°C mit 26 $cm^3$ (65 mmol) einer 2,5 molaren Hexan-Lösung von n-Butyllithium versetzt. Nach 15 min Rühren wurde das Lösemittel im Vakuum abgezogen. Der verbleibende dunkelrote Rückstand wurde mehrmals mit Hexan gewaschen und im Ölpumpenvakuum getrocknet. Es wurden 15,6 g des roten Dilithiosalzes als THF-Addukt erhalten, das ca. 30 % THF enthielt.

Eine Suspension von 4,78 g (14,9 mmol) $HfCl_4$ in 70 $cm^3$ $CH_2Cl_2$ wurde mit 14,9 mmol Dilithiosalzes umgesetzt und aufgearbeitet. Die Kristallisation bei -35°C ergab 2,6 g (30 %) der Hafnocendichlorid-Verbindung als Kristalle. Korrekte Elementaranalyse.

$^1$H-NMR-Spektrum (100 MHz, $CDCl_3$): 7,17 - 8,20 (m, 11, Flu-H, Ph-H), 6,87 (m, 1, Ph-H), 6,12 - 6,42 (m, 3, Ph-H, CpH), 5,82, 5,67 (2xdd, 2x1, Cp-H), 2,52 (s, 3, $CH_3$).

**Beispiel 1 (Vergleichsbeispiel)**

Ein trockener 16 $dm^3$ Reaktor wurde mit Stickstoff gespült und mit 10 $dm^3$ flüssigem Propylen befüllt. Dann wurden 30 $cm^3$ toluolische Methylaluminoxanlösung (entsprechend 40 mmol Al, mittlerer Oligomerisierungsgrad des Methylaluminoxans 20) zugegeben und der Ansatz bei 30°C 15 Minuten gerührt.

Parallel dazu wurden 17,6 mg (0,04 mmol) Dimethylmethylen(9-fluorenyl)(cyclopentadienyl)-zirkondichlorid in 15 $cm^3$ toluolischer Methylaluminoxanlösung (20 mmol Al) gelöst, durch 15 minütiges Stehenlassen voraktiviert und dann in den Kessel gegeben.

Das Polymerisationssystem wurde auf 60°C gebracht und 18 g Ethylen wurden gleichmäßig wahrend der 30 minütigen Polymerisationszeit zudosiert.

Es wurden 1,44 kg Polymerpulver mit einem MFI 230/5 von 49 $dg.min^{-1}$ erhalten. Der Ethyleneinbau betrug 1,2 Gew.-% Blocklängen: $\bar{n}_{PP}$ = 58, $\bar{n}_{PE} \sim 1$, $\bar{n}_{syn}$ = 24; VZ = 122 $cm^3/g$; $M_w$ = 96900 g/mol, $M_w/M_n$ = 2,2; Smp = 128°C, Kristp. = 71°C, $T_g$ = -0,3°C; Kugeldruckhärte 31 $Nmm^{-2}$; Kerbschlagzähigkeit bei 0°C 6,1 $mJmm^{-2}$, bei -20°C 4,3 $mJmm_{-2}$; kein Bruch bei + 23°C.

**Vergleichsbeispiel A**

Ein unter vergleichbaren Polymerisationsbedingungen, jedoch ohne Verwendung von Ethylen polymerisiertes syndiotaktisches Homopolymer hatte eine $T_g$ von 1,5°C, einen Smp von 134°C und einen Kristp von 88°C. Kerbschlägigkeit bei 0°C 2,0 $mJmm^{-2}$` bei 23°C 15,1 $mJmm^{-2}$.

**Beispiel 2**

Es wurde verfahren wie in Beispiel 1, verwendet wurden jedoch 37,9 mg (0,065 mmol) (Phenyl(methyl)methylen)(9-fluorenyl)(cyclopentadienyl)-hafniumdichlorid, und während der dreistündigen Polymerisation wurden 37,5 g Ethylen gleichmäßig zudosiert.

Es wurden 0,8 kg Polymerpulver mit einem MFI 230/5 von 0,4 $dg.min^{-1}$ erhalten. Der Ethyleneinbau betrug 1,3 Gew.-

%. Blocklängen: $\bar{n}_{PP}$ = 53, $\bar{n}_{PE}$ ~ 1, $\bar{n}_{syn}$ = 22; VZ = 655 $cm^3/g$; $M_w$ = 807000 g/mol, $M_w/M_n$ = 2,2; Smp = 105°C, Kristp = 55°C, $T_g$ = 1,6°C. Kerbschlagzähigkeit: kein Bruch bei +23°C, 6,7 $mJmm^{-2}$-bei 0°C.

**Vergleichsbeispiel B**

Ein unter vergleichbaren Polymerisationsbedingungen, jedoch ohne Verwendung von Ethylen polymerisertes syndiotaktisches Homopolymer hatte einen Schmelzpunkt von 120°C. Kerbschlagzähigkeit 12,7 $mJmm^{-2}$ + 23°C und 2,0 $mJmm^{-2}$ bei 0°C.

**Beispiel 3**

Es wurde verfahren wie in Beispiel 1, verwendet wurden jedoch 12,7 mg (0,023 mmol) Diphenylmethylen(9-fluorenyl)(cyclopentadienyl)-zirkondichlorid.
Vor Zugabe des Metallocens in das Polymerisationssystem wurden 7,5 g Ethylen in den Reaktor gegeben. Während der 60 minütigen Polymerisationszeit wurden weitere 30 g Ethylen gleichmäßig zudosiert.

Es wurden 1,0 kg Polymerpulver erhalten. Der Ethyleneinbau betrug 2,7 Gew.-%. Blocklängen: $\bar{n}_{PP}$ = 24, $\bar{n}_{PE}$ ~ 1, SI = 94,9 %; VZ = 365 $cm^3/g$; $M_w$ = 411000 g/mol, $M_w/M_n$ = 2,8; Smp = 104°C, Kristp = 61°C, $T_g$ =-4,3°C. Kerbschlagzähigkeit: kein Bruch bei + 23°C, 5,9 $mJmm^{-2}$ bei 0°C und 4,3 $mJmm^{-2}$ bei -20°C

**Beispiel 4**

Es wurde verfahren wie in Beispiel 1, verwendet wurden jedoch 10,8 mg (0,02 mmol) Diphenylmethylen-(9-fluorenyl)-(cyclopentadienyl)zirkondichlorid, und während der 90 minütigen Polymerisation wurden 37,5 g Ethylen gleichmäßig zudosiert.

Es wurden 1,20 kg Polymerpulver mit einem MFI 230/5 von 0,3 $dg.min^{-1}$ erhalten. Der Ethyleneinbau betrug 2,1 Gew.-%. Blocklängen: $\bar{n}_{PP}$ = 31,5, $\bar{n}_{PE}$ ~ 1, SI = 95,2 %; VZ = 415 $cm^3/g$; $M_w$ = 457500 g/mol, $M_w/M_n$ = 2,6; Smp = 115°C, Kristp = 71°C, $T_g$ = 0,2°C; Kugeldruckhärte 24 $Nmm^{-2}$; Kerbschlagzähigkeit bei 0°C 6,7 $mJmm^{-2}$ und bei -20°C 4,2 mJmm. Bei + 23°C erfolgte kein Bruch.

**Vergleichsbeispiel C**

Ein unter vergleichbaren Polymerisationsbedingungen, jedoch ohne Verwendung von Ethylen polymerisiertes syndiotaktisches Homopolymer hatte einen Schmelzpunkt von 136°C und eine $T_g$ von 5,2°C. Die Kerbschlagzähigkeit bei 0°C betrug nur 1,2 $mJmm^{-2}$, bei +23°C 11,7 $mJmm^{-2}$.

**Beispiel 5**

Es wurde verfahren wie in Beispiel 1, verwendet wurden jedoch 10,8 mg (0,02 mmol) Diphenylmethylen(9-fluorenyl)(cyclopentadienyl)zirkondichlorid und während der 60 minütigen Polymerisation bei 70°C wurden 17,5 g Ethylen gleichmäßig zudosiert.
Es wurden 1,20 kg Polymerpulver mit einem MFI 230/5 von 0,2 $dg.min^{-1}$ erhalten.
Der Ethylenbeinbau betrug 0,75 Gew.-%. Blocklängen: $\bar{n}_{PP}$ = 89, $\bar{n}_{PE}$ ~ 1, SI = 95,8 %; VZ = 410 $cm^3/g$; $M_w$ = 491500 g/mol, $M_w/M_n$ = 2,3; Smp = 124°C, Kristp = 83°C, $T_g$ = 2,6 °C; Kugeldruckhärte 26 $Nmm^{-2}$; die Kerbschlagzähigkeit bei 0°C 5,0 $mJmm^{-2}$ und bei -20°C 4,2 $mJmm^{-2}$; kein Bruch bei + 23°C.

**Beispiel 6**

Es wurde verfahren wie in Beispiel 5, die Polymerisationstemperatur betrug jedoch 60°C. Es wurden 0,65 kg Polymerpulver mit einem MFI 230/5 von 0,3 $dg.min^{-1}$ erhalten.
Der Ethyleneinbau betrug 0,94 Gew.-%. Blocklängen: $\bar{n}_{PP}$ = 73, $\bar{n}_{PE}$ ~ 1, SI = 95,5 %; VZ = 445 $cm^3/g$; $M_w$ = 547500, $M_w/M_n$ = 2,9; Smp = 128°C, Kristp = 88°C, $T_g$ = 3,1°C; Kugeldruckhärte 27 $Nmm^{-2}$; Kerbschlagzähigkeit bei 0°C 6,9 $mJmm^{-2}$ und bei -20°C 4,3 $mJmm^{-2}$; kein Bruch bei + 23°C.

**Beispiel 7**

Es wurde verfahren wie in Beispiel 5, die Metalloceneinwaage betrug jedoch 21,6 mg (0,039 mmol) und die Polymerisationstemperatur 50°C.
Es wurden 0,71 kg Polymerpulver mit einem MFI 230/5 von 0,2 $dg.min^{-1}$ erhalten. Der Ethyleneinbau betrug 1,1 Gew.-%. Blocklängen: $\bar{n}_{PP}$ = 60, $\bar{n}_{PE}$ ~ 1, SI = 96,0 %; VZ = 531 $cm^3/g$; $M_w$ = 634000, $M_w/M_n$ = 2,8; Smp. = 127°C, Kristp =

90°C, $T_g$ = 2,8°C; Kugeldruckhärte 27 $Nmm^{-2}$; Kerbschlagzähigkeit bei 0°C 7,9 $mJmm^{-2}$ und bei -20°C 5,4 $mJmm^{-2}$; kein Bruch bei + 23°C.

**Beispiel 8**

Es wurde verfahren wie in Beispiel 7, zusätzlich wurden jedoch zu Beginn der Polymerisation 25 $Ndm^3$ Wasserstoff in den Reaktor gegeben. Es wurden 1,15 kg Polymerpulver mit einem MFI 230/5 von 8,0 dg. $min^{-1}$ erhalten. Der Ethyleneinbau betrug 1,0 Gew.-%. Blocklängen: $\bar{n}_{PP}$ = 66, $\bar{n}_{PE}$= 1, SI = 97,1 %, VZ = 286 $cm^3$/hg, $M_w$ = 418000, $M_w/M_n$ = 2,1; Smp = 125°C, Kristp = 88 °C, $T_g$ = 2,5°C, Kugeldruckhärte 30 $Nmm^{-2}$; Kerbschlagzähigkeit bei 0°C 7,0 $mJmm^{-2}$ und bei -20°C 4,7 $mJmm^{-2}$; kein Bruch bei +23°C.

**Beispiel 9**

Es wurde verfahren wie in Beispiel 8, die verwendete Ethylenmenge betrug jedoch 195 g und die Polymerisationsdauer 2 h. Es wurden 1,8 kg Polymerpulver mit einem MFI 230/5 von 2 dg $min^{-1}$ erhalten. Der Ethyleneinbau betrug 9,9 Gew.-%. Blocklänge: $\bar{n}_{PP}$ = 7,5, $\bar{n}_{PE}$ = 1,1, VZ = 595 $cm^3$/g; $M_w$ = 705000, $M_w/M_n$ = 2,2; Smp 95°C, Kristp = 60°C, $T_g$ = -10,5°C. Kerbschlagzähigkeit bei 0°C 15,2 $mJmm^{-2}$; kein Bruch bei + 23°C.

**Patentansprüche**

1. Verfahren zur Herstellung eines syndiotaktischen Propylen-Copolymers, bestehend aus 99,9 bis 50 Gew.-%, bezogen auf das Gesamtpolymer, Propyleneinheiten und 0,1 bis 50 Gew.-%, bezogen auf das Gesamtpolymer, aus Einheiten, die sich von Ethylen oder einem Olefin mit mindestens 4 C-Atomen der Formel $R^a$-CH=CH-$R^b$ ableiten, worin $R^a$ und $R^b$ gleich oder verschieden sind und ein Wasserstoffatom oder einen Alkylrest mit 1 bis 20 C-Atomen bedeuten oder $R^a$ und $R^b$ mit den sie verbindenden C-Atomen einen Ring mit 4 bis 10 C-Atomen bilden, durch Polymerisation von 50 bis 99,5 Gew.-%, bezogen auf die Gesamtmenge der Monomeren, Propylen und 0,5 bis 50 Gew.-%, bezogen auf die Gesamtmenge der Monomeren, mindestens eines Vertreters der Gruppe Ethylen und Olefine mit mindestens 4 C-Atomen der Formel $R^a$-CH=CH-$R^b$, worin $R^a$ und $R^b$ die oben genannte Bedeutung haben, bei einer Temperatur von -40°C bis 150°C, bei einem Druck von 0,5 bis 100 bar, in Lösung, in Suspension oder in der Gasphase, in Gegenwart eines Katalysators, welcher aus einem Metallocen als Übergangsmetallkomponente und einem Aluminoxan der Formel II

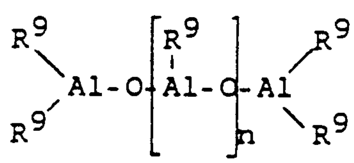

(II)

für den linearen Typ und/oder der Formel III

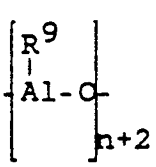

(III)

für den cyclischen Typ besteht, wobei in den Formeln II und III $R^9$ eine $C_1$-$C_6$-Alkylgruppe oder Phenyl oder Benzyl bedeutet und n eine ganze Zahl von 2 bis 50 ist, dadurch gekennzeichnet, daß die Polymerisation in Gegenwart eines Katalysators durchgeführt wird, dessen Übergangsmetallkomponente eine Verbindung der Formel I

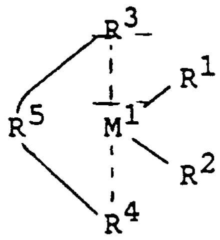

(I)

ist, worin

| | |
|---|---|
| $M^1$ | Titan, Zirkon, Hafnium, Vanadium, Niob oder Tantal ist, |
| $R^1$ und $R^2$ | gleich oder verschieden sind und ein Wasserstoffatom, ein Halogenatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe oder eine $C_8$-$C_{40}$-Arylalkenylgruppe bedeuten, |
| $R^3$ und $R^4$ | verschieden sind und einen ein- oder mehrkernigen Kohlenwasserstoffrest, welcher mit dem Zentralatom $M^1$ eine Sandwichstruktur bilden kann, bedeuten, |
| $R^5$ | |

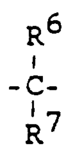 oder 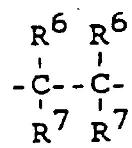

ist, wobei $R^6$ und $R^7$ gleich oder verschieden sind und $R^6$ eine $C_6$-$C_{10}$-Arylgruppe ist und $R^7$ ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Fluorarylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder $R^6$ und $R^7$ jeweils mit den sie verbindenden Atomen einen Ring bilden.

2. Syndiotaktisches Propylen-Copolymer, bestehend aus 99,9 bis 50 Gew.-%, bezogen auf das Gesamtpolymer, Propyleneinheiten und 0,1 bis 50 Gew.-%, bezogen auf das Gesamtpolymer, aus Einheiten, die sich von Ethylen oder einem Olefin mit mindestens 4 C-Atomen der Formel $R^a$-CH=CH-$R^b$ ableiten, worin $R^a$ und $R^b$ gleich oder verschieden sind und ein Wasserstoffatom oder einen Alkylrest mit 1 bis 20 C-Atomen bedeuten oder $R^a$ und $R^b$ mit den sie verbindenden C-Atomen einen Ring mit 4 bis 10 C-Atomen bilden, erhältlich nach dem Verfahren von Anspruch 1.

3. Verwendung des syndiotaktischen Propylen-Copolymeren gemäß Anspruch 2 zur Herstellung von Folien und Formkörpern durch Extrusion, Spritzguß, Blasformen oder Preßsintern.

4. Folie oder Formkörper enthaltend ein syndiotaktisches Propylen-Copolymer gemäß Anspruch 2.

## Claims

1. A process for the preparation of a syndiotactic propylene copolymer comprising 99.9 to 50 % by weight, relative to the entire polymer, of propylene units and 0.1 to 50 % by weight, relative to the entire polymer, of units derived from ethylene or an olefin having at least 4 carbon atoms of the formula $R^a$-CH=CH-$R^b$, in which $R^a$ and $R^b$ are identical or different and are a hydrogen atom or an alkyl radical having 1 to 20 carbon atoms or $R^a$ and $R^b$ together with the carbon atoms linking them form a ring of 4 to 10 carbon atoms, by polymerization of 50 to 99.5 % by weight, relative to the total amount of the monomers, of propylene and 0.5 to 50 % by weight, relative to the total amount of the monomers, of at least one representative from the group comprising ethylene and olefins having at least 4 carbon atoms of the formula $R^a$-CH=CH-$R^b$, in which $R^a$ and $R^b$ have the abovementioned meaning, at a temperature of -40°C to 150°C and a pressure of 0.5 to 100 bar in solution, in suspension or in the gas phase, in the presence of a

catalyst which comprises a metallocene as the transition metal component and an aluminoxane of the formula II

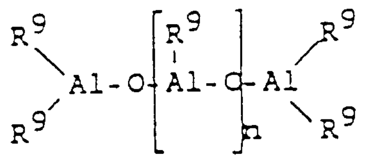

(II)

for the linear type and/or of the formula III

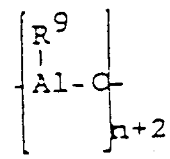

(III)

for the cyclic type, $R^9$ in formulae II and III being a $C_1$-$C_6$-alkyl group or phenyl or benzyl and n an integer from 2 to 50, which comprises carrying out the polymerization in the presence of a catalyst whose transition metal component is a compound of the formula I

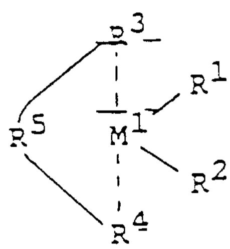

(I)

in which

| | |
|---|---|
| $M^1$ | is titanium, zirconium, hafnium, vanadium, niobium or tantalum, |
| $R^1$ and $R^2$ | are identical or different and are a hydrogen atom, a halogen atom, a $C_1$-$C_{10}$-alkyl group, a $C_1$-$C_{10}$-alkoxy group, a $C_6$-$C_{10}$-aryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group or a $C_8$-$C_{40}$-arylalkenyl group, |
| $R^3$ and $R^4$ | are different and are a mono- or polynuclear hydrocarbon radical which together with the central atom $M^1$ can form a sandwich structure, |
| $R^5$ | is |

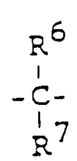

or

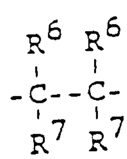

in which $R^6$ and $R^7$ are identical or different and $R^6$ is a $C_6$-$C_{10}$-aryl group and $R^7$ is a hydrogen atom, a halogen atom, a $C_1$-$C_{10}$-alkyl group, a $C_1$-$C_{10}$-fluoroalkyl group, a $C_6$-$C_{10}$-fluoroaryl group,

a $C_6$-$C_{10}$-aryl group, a $C_1$-$C_{10}$-alkoxy group, a $C_2$-$C_{10}$-alkenyl group, a $C_7$-$C_{40}$-arylalkyl group, a $C_8$-$C_{40}$-arylalkenyl group or a $C_7$-$C_{40}$-alkylaryl group or $R^6$ and $R^7$ in each case together with the atoms linking them form a ring.

**2.** A syndiotactic propylene copolymer comprising 99.9 to 50 % by weight, relative to the entire polymer, of propylene units and 0.1 to 50 % by weight, relative to the entire polymer, of units derived from ethylene or an olefin having at least 4 carbon atoms of the formula $R^a$-CH=CH-$R^b$, in which $R^a$ and $R^b$ are identical or different and are a hydrogen atom or an alkyl radical having 1 to 20 carbon atoms or $R^a$ and $R^b$ together with the carbon atoms linking them form a ring having 4 to 10 carbon atoms, obtainable by the process of claim 1.

**3.** Use of a syndiotactic propylene copolymer as claimed in claim 2 for the production of films and molded articles by extrusion, injection molding, blow molding or press sintering.

**4.** A film or molded article comprising a syndiotactic propylene copolymer as claimed in claim 2.

## Revendications

**1.** Procédé de préparation d'un copolymère de propylène syndiotactique constitué de 99,9 à 50 % en masse, par rapport au polymère entier, d'unités de propylène et de 0,1 à 50 % en masse, par rapport au polymère entier, d'unités qui dérivent de l'éthylène ou d'une oléfine ayant au moins 4 atomes de carbone de formule $R^aCH=CHR^b$, dans laquelle $R^a$ et $R^b$ sont identiques ou différents et représentent un atome d'hydrogène ou un reste alkyle de 1 à 20 atomes de carbone, ou $R^a$ et $R^b$ peuvent former un cycle de 4 à 10 atomes de carbone avec les atomes de carbone auxquels ils sont liés, par polymérisation de 50 à 99,5 % en masse, par rapport à la quantité totale de monomères, de propylène, et de 0,5 à 50 % en masse, par rapport à la quantité totale de monomères, d'au moins un membre du groupe constitué par l'éthylène et des oléfines d'au moins 4 atomes de carbone de formule $R^aCH=CHR^b$, dans laquelle $R^a$ et $R^b$ ont la signification indiquée ci-dessus, à une température de -40 à 150°C, sous une pression de 0,5 à 100 bars, en solution, en suspension ou en phase gazeuse, en présence d'un catalyseur constitué d'un métallocène comme constituant de métal de transition et d'un aluminoxane de formule II

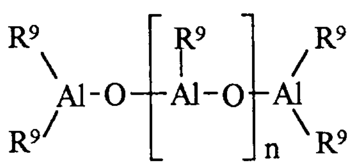

(II)

en ce qui concerne le type linéaire, et/ou de formule III

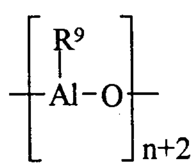

(III)

en ce qui concerne le type cyclique, $R^9$ représentant dans les formules II et III un groupe alkyle en $C_1$-$C_6$ ou un groupe phényle ou benzyle, et n étant un nombre entier de 2 à 50, caractérisé en ce que l'on effectue la polymérisation en présence d'un catalyseur dont le constituant de métal de transition est un composé de formule I

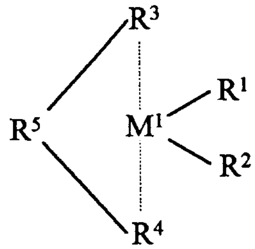

(I)

dans laquelle

| | |
|---|---|
| $M^1$ | représente le titane, le zirconium, l'hafnium, le vanadium, le niobium ou le tantale, |
| $R^1$ et $R^2$ | sont identiques ou différents et représentent chacun un atome d'hydrogène, un atome d'halogène, un groupe alkyle en $C_1$-$C_{10}$, un groupe alcoxy en $C_1$-$C_{10}$, un groupe aryle en $C_6$-$C_{10}$, un groupe aryloxy en $C_6$-$C_{10}$, un groupe alcényle en $C_2$-$C_{10}$, un groupe arylalkyle en $C_7$-$C_{40}$, un groupe alkylaryle en $C_7$-$C_{40}$ ou un groupe arylalcényle en $C_8$-$C_{40}$, |
| $R^3$ et $R^4$ | sont différents et représentent des restes hydrocarbonés mono- ou polycycliques qui peuvent former avec l'atome central $M^1$ une structure en sandwich, |
| $R^5$ | représente un groupe |

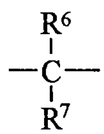 ou 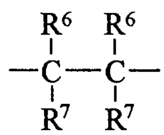 ,

où $R^6$ et $R^7$ sont identiques ou différents et $R^6$ est un groupe aryle en $C_6$-$C_{10}$ et $R^7$ représente un atome d'hydrogène, un atome d'halogène, un groupe alkyle en $C_1$-$C_{10}$, un groupe fluoroalkyle en $C_1$-$C_{10}$,un groupe fluoroaryle en $C_6$-$C_{10}$,un groupe aryle en $C_6$-$C_{10}$, un groupe alcoxy en $C_1$-$C_{10}$, un groupe alcényle en $C_2$-$C_{10}$, un groupe arylalkyle en $C_7$-$C_{40}$, un groupe arylalcényle en $C_8$-$C_{40}$ ou un groupe alkylaryle en $C_7$-$C_{40}$, ou $R^6$ et $R^7$ forment un cycle avec les atomes auxquels ils sont liés.

**2.** Copolymère de propylène syndiotactique, constitué de 99,9 à 50 % en masse, par rapport au polymère entier, d'unités de propylène et de 0,1 à 50 % en masse, par rapport au polymère entier, d'unités qui dérivent de l'éthylène ou d'une oléfine ayant au moins 4 atomes de carbone de formule $R^aCH=CHR^b$, dans laquelle $R^a$ et $R^b$ sont identiques ou différents et représentent un atome d'hydrogène ou un reste alkyle de 1 à 20 atomes de carbone, ou $R^a$ et $R^b$ peuvent former un cycle de 4 à 10 atomes de carbone avec les atomes de carbone auxquels ils sont liés, qui peut être obtenu par le procédé de la revendication 1.

**3.** Utilisation des copolymères de propylène syndiotactiques selon la revendication 2 pour la préparation de feuilles et de corps moulés par extrusion, moulage par injection, moulage par soufflage ou frittage sous pression.

**4.** Feuilles ou corps moulés contenant un copolymère de propylène syndiotactique selon la revendication 2.